(19) **Europäisches Patentamt / European Patent Office / Office européen des brevets**

(11) **EP 3 105 032 B1**

(12) **EUROPEAN PATENT SPECIFICATION**

(45) Date of publication and mention
of the grant of the patent:
**07.10.2020 Bulletin 2020/41**

(21) Application number: **15708741.2**

(22) Date of filing: **11.02.2015**

(51) Int Cl.:
**B29C 49/42** *(2006.01)*  **B29C 49/58** *(2006.01)*
**B29C 49/12** *(2006.01)*  **B29C 49/78** *(2006.01)*
**F16K 31/124** *(2006.01)*

(86) International application number:
**PCT/EP2015/052835**

(87) International publication number:
**WO 2015/121285 (20.08.2015 Gazette 2015/33)**

(54) **A VALVE FOR A BLOW MOLDING MACHINE AND A METHOD FOR ACTUATING A VALVE FOR A BLOW MOLDING MACHINE**

VENTIL FÜR EINE BLASFORMMASCHINE UND VERFAHREN ZUR BETÄTIGUNG EINES VENTILS FÜR EINE BLASFORMMASCHINE

SOUPAPE POUR UNE MACHINE DE MOULAGE PAR SOUFFLAGE ET PROCÉDÉ D'ACTIONNEMENT D'UNE SOUPAPE POUR UNE MACHINE DE MOULAGE PAR SOUFFLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.02.2014 US 201461938313 P**

(43) Date of publication of application:
**21.12.2016 Bulletin 2016/51**

(60) Divisional application:
**18188181.4 / 3 418 029**

(73) Proprietor: **Norgren AG**
**8362 Balterswil (CH)**

(72) Inventor: **RYMANN, Othmar**
**8362 Balterswil (TG) (CH)**

(74) Representative: **Gray, James**
**Withers & Rogers LLP**
**4 More London Riverside**
**London SE1 2AU (GB)**

(56) References cited:
**EP-A1- 2 402 143     WO-A1-2009/010096**
**FR-A1- 2 827 541**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present Application relates to valves, and more particularly, to a blow valve.

### BACKGROUND OF THE APPLICATION

Blow-molding is a process for molding a preform part into a desired product. One specific type of blow-molding is stretch blow-molding. Stretch blow-molding can be used in a wide variety of applications; however, one of the most widely used applications is in the production of Polyethylene terephthalate (PET) products, such as drinking bottles.

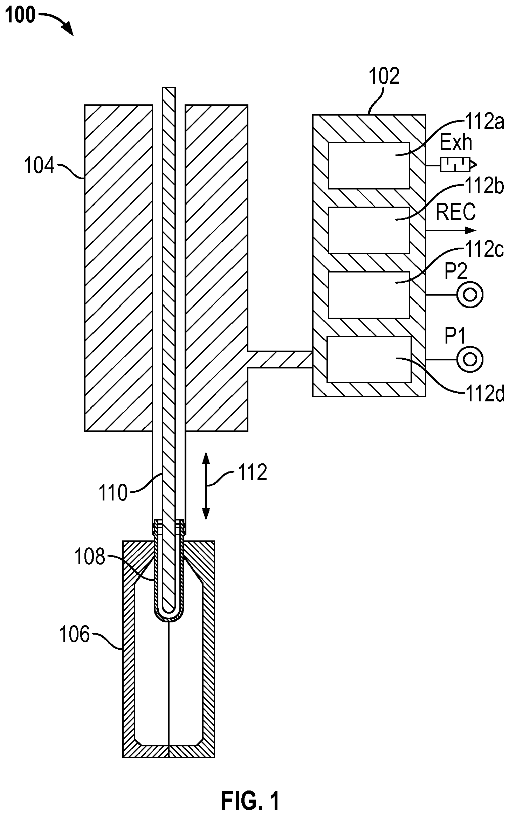

For example, **FIG. 1** depicts a simplified stretch blow molding machine 100. Example stretch blow-molding machine 100 includes a valve block 102, a blow cylinder 104, a blow mold 106, a preform 108, and a stretch rod 110. Blow valve block 102 includes four blow valves, 112a, 112b, 112c, and 112d that are operable to open or close a fluid connection between blow cylinder 104 and a fluid port. For example, blow valve 112a may be fluidly connected to an exhaust, blow valve 112b may be fluidly connected to a fluid reclamation reservoir, blow valve 112c may be fluidly connected to a high pressure source P2, and blow valve 112d may be fluidly connected to a low pressure source PI. The example of blow valve block 102 is not intended to be limiting, however. In embodiments, blow valve block 102 may include any number of blow valves 112 connected to any number of fluid ports. Blow valve block 102 provides low-pressure and high-pressure fluid supplies to preform 108 via blow cylinder 104, and may also be used to reclaim gas, or to exhaust gas.

Blow cylinder 104 moves reciprocally between a retracted and extended position to come into contact with a preform 108 positioned below. In the retracted position, blow cylinder 106 is positioned to allow a gripper (not shown) to insert preform 108 into blow mold 106 or remove a finished product from blow mold 106.

In FIG. 1, blow cylinder 104 is in an extended position, providing a fluid connection between blow valve block 102 and a preform 108. In the extended position, blow cylinder 104 seats on a portion of preform 108 external to blow mold 106 to create a seal. A stretch rod 110 is extended into preform 108. Stretch rod 110 may be used to longitudinally expand preform 108 into mold cavity 106. Blow mold 106 includes a cavity that comprises the outer shape of the desired product.

Typically, the stretch blow-molding process includes applying a low-pressure fluid supply from blow valve block 102 along with stretch rod 110 during a pre-blow phase to stretch the preform 108 in a longitudinal direction and radially outward. The stretch blow-molding process next uses one or more high-pressure fluid supplies during a blowing phase to expand the portion of preform 108 into blow mold 106. The resulting product is generally hollow with an exterior shape conforming to the shape of mold cavity 106. The gas in the preform 108 is exhausted through blow valve block 102. In a variation of the stretch-blow molding process, the expanded preform 108 may be heated via mold 106 during the pre-blow and blowing phases. The stretch-blow molding process may further include a cold set stage during which cool air is flowed into preform 108 from a cooling valve and recovered by recovery valve. The cold set stage is then followed by an exhaust stage. The stretch blow-molding process is then repeated during each blow-molding cycle.

The blow valve 112 cycle time and or actuation time can add to the overall time to fabricate a bottle or product via the stretch blow-molding process. It is therefore important to actuate blow valve 112 as quickly as possible.

Prior blow valve designs use a working fluid pressure to actuate the blow valve. Using a working fluid pressure to actuate a blow valve provides for blow valve actuation times that vary with working fluid pressure, however. In addition, using a working fluid pressure to actuate leads to asymmetric open and close cycle times. For example, it may take a prior valve 29 ms to open and 44 ms to close. Prior valves that use working fluid pressure to actuate have lower actuation accuracy, for example some prior valves offer an accuracy of ±2 ms. Using working fluid pressure to actuate can further negatively impact the repeatability of the performance of a valve.

Prior blow valve designs also have long stroke length, which can lead to slower actuation times.

Prior blow valve designs require a mechanical biasing member to retain the blow valve in a stable position. The biasing member provides an additional force that must be overcome to actuate the valve, however, which can further impact actuation time and accuracy.

Conventional blow molding valves are disclosed in FR2827541A1, WO2009/010096 A1 and EP2402143A1. WO2009010096A1 corresponds to the preambles of the independent claims.

There is a need in the art for a blow valve that is fast, efficient, accurate, providing repeatable results. The present embodiments described below overcome these and other problems and an advance in the art is achieved.

### SUMMARY OF THE APPLICATION

A valve for a blow molding machine is provided according to claim 1.

A method for actuating a valve for a blow molding machine is provided according to claim 7.

Aspects, embodiments and examples of the present disclosure which do not fall under the scope of the appended claims do not form part of the invention and are merely provided for illustrative purposes.

## BRIEF DESCRIPTION OF THE DRAWINGS

FIG. 1 depicts a view of blow molding machine 100, in accordance with an embodiment.

FIG. 2 depicts a view of blow valve 112, in accordance with an embodiment.

FIG. 3 depicts a view of blow valve 112, in accordance with an embodiment.

FIG. 4 depicts a view of blow valve 112, in accordance with an embodiment.

## DETAILED DESCRIPTION OF THE APPLICATION

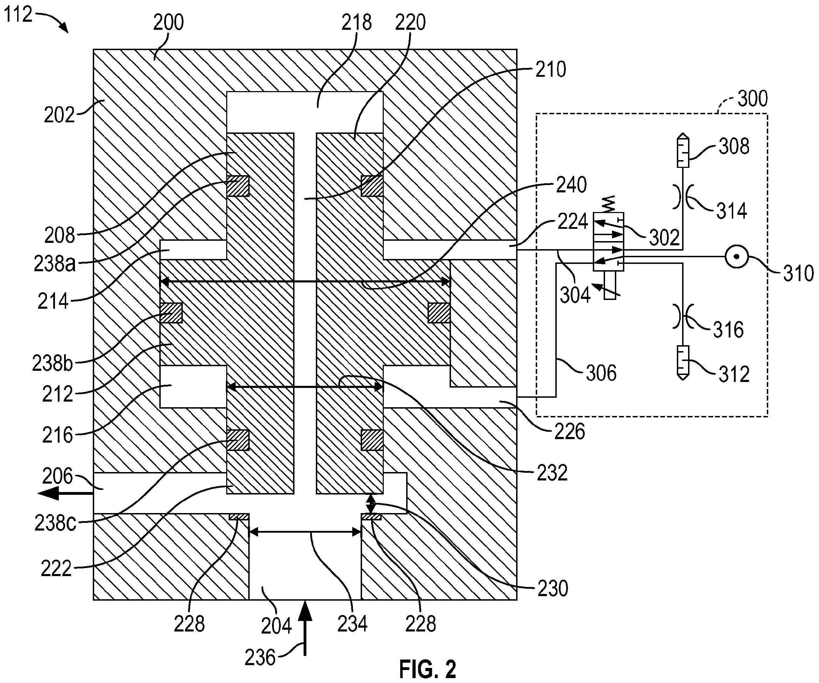

FIG. 2-4 and the following description depict specific examples to teach those skilled in the art how to make and use the best mode of the Application. For the purpose of teaching inventive principles, some conventional aspects have been simplified or omitted. Those skilled in the art will appreciate variations from these examples that fall within the scope of the Application. Those skilled in the art will appreciate that the features described below may be combined in various ways to form multiple variations of the Application. As a result, the Application is not limited to the specific examples described below, but only by the claims and their equivalents.

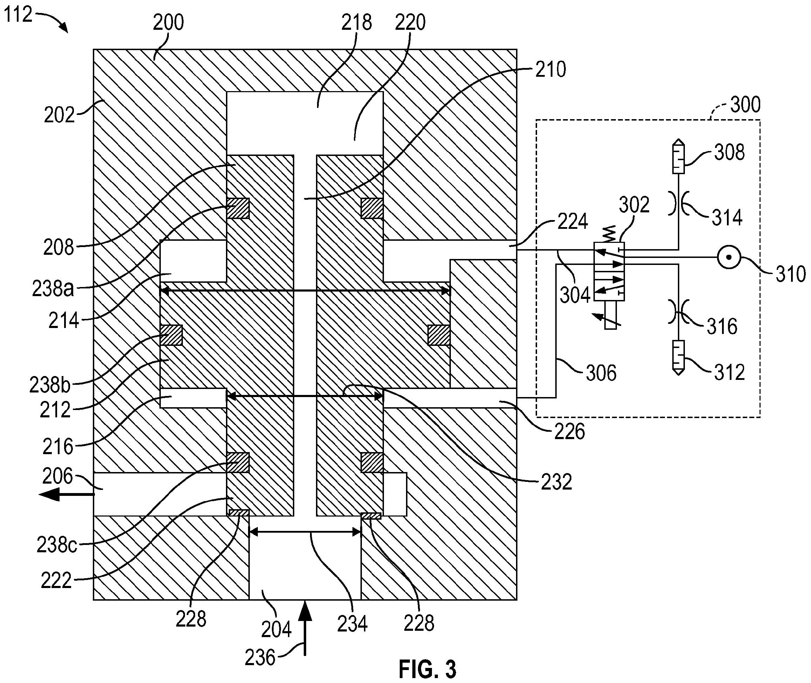

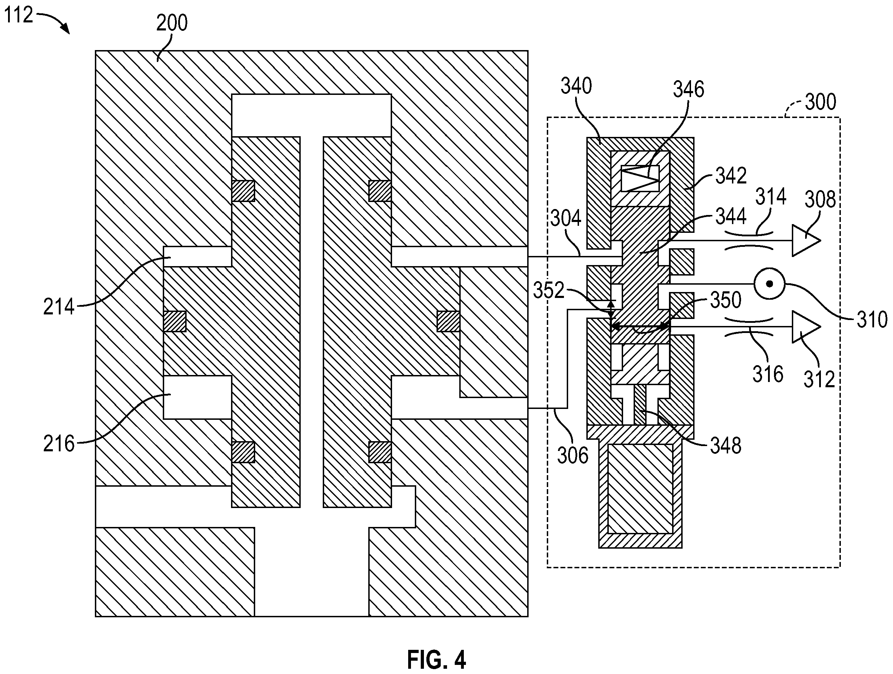

**FIGs. 2, 3, and 4** depict details of blow valve 112, in accordance with an embodiment. Blow valve 112 may include main valve 200 and pilot valve system 300. Blow valve 112 is operable to open and close a passageway on main valve 200 between an inlet 204 and an outlet 206. In FIGs. 2 and 4, blow valve 112 is depicted in an open position, and in FIG. 3 blow valve 112 is in a closed position.

Main valve 200 includes a housing 202 with a movable piston 208 contained therein. Housing 202 includes inlet 204 and outlet 206. In the interior space of housing 220, within which piston 208 reciprocates, housing 202 includes a valve seat 228. Valve seat 228 is a surface upon which piston 208 may be seated to interrupt the flow of fluid between inlet 204 and outlet 206, thereby closing main valve 200.

Piston 208 is movable over a piston stroke 230 inside housing 202 to open and close a passageway between inlet 204 and outlet 206. Piston 208 includes a pressure compensation end 220 and a valve seat end 222. When closed, valve seat end 222 of piston 208 comes to rest on valve seat 228. Main valve 200 is open when piston 208 is in any position unseated from valve seat 228. Main valve 200 is fully open when piston 208 is positioned at the top of piston stroke 230.

In the embodiment of main valve 200, piston 208 is cylindrical and valve seat 228 is circular in shape. This is not intended to be limiting, however, as this Application anticipates embodiments of piston 208 that are not circular in cross section along a long axis of piston 208. For example, piston 208 and valve seat 228 may include an oval cross section, a square cross section, or any other cross section commonly known to those of skill in the art.

Piston 208 further includes a pressure compensation bore 210. A pressure compensation chamber 218 is formed from the space between the interior of housing 202 and pressure compensation end 220 of piston 208. Pressure compensation bore 210 fluidly connects valve seat end 222 to pressure compensation end 220 of piston 208, thereby providing a fluid connection between inlet 204 and pressure compensation chamber 218. In embodiments, an inlet fluid pressure 236 applied at inlet 204, represented by an arrow in FIG. 2 , provides a force on each of the pressure compensation end 220 and the valve seat end 222 of piston 108. This is not intended to be limiting, however. In embodiments, fluid may be venting from outlet 206 towards inlet 204, as when blow molding machine 100 is exhausting or reclaiming fluid.

In the embodiment of main valve 200, the surface area of the pressure compensation end 220 is the same as the surface area of the valve seat end 222, which is equal to a piston diameter 232. Therefore, when main valve 200 is in an open position, the force applied by inlet fluid pressure 236 to the valve seat end 222 of piston 208 is equal to the force applied by inlet fluid pressure 236 to the pressure compensation end 220 of piston 208, as may be seen in FIG. 3. In this way, pressure compensation chamber 218 may provide pressure compensation to balance 100% of the force applied by inlet fluid pressure 236 at valve seat end 222 of piston 108. In this pressure-balanced environment, main valve 200 may be actuated independently of an inlet fluid pressure 236 supplied during the blow molding process, allowing for fast actuation times and accurate, repeatable results. The pressure compensation of main valve 200 in the open position is the same regardless of whether the blow valve machine 100 is in a low pressure, high pressure, exhaust, or reclaim cycle.

In further embodiments, the surface area of the pressure compensation end 220 and the valve seat end 222 of piston 208 may include different surface areas, however, providing a pressure compensation between the two ends that is less than or greater than 100%.

In embodiments, piston 208 may include an annular portion 212. Annular portion 212 extends from a central longitudinal portion of piston 208 inside housing 202. Annular portion 212 has an annular diameter 240 that is wider than piston diameter 232. The space between an upper end of annular portion 212 and housing 202 defines an upper control chamber 214, and the space between a lower end of annular portion 212 and housing 202 defines a lower control chamber 216. Pressurized fluid may enter or exit upper control chamber 214 via an upper control port 224, and pressurized fluid may enter or exit lower control chamber 216 via lower control port 226.

Upper control chamber 214 and lower control chamber 216 may be used to pneumatically actuate main valve 200. Because main valve 200 is pressure-balanced, the pneumatic actuation of main valve 200 via upper control chamber 214 and lower control chamber 216 is independent of inlet fluid pressure 236 provided at inlet 204. Therefore, for a given pattern of pilot pressures applied to upper control chamber 214 and lower control chamber 216, the time required to actuate or cycle main valve 200 through a piston stroke may be uniform regardless of inlet fluid pressure 236 at inlet 204. It therefore may not be necessary to overcome the force provided by inlet fluid pressure 236 to actuate main valve 200 through piston stroke 230. Without the need to overcome a potential force applied by inlet fluid pressure 236, it may be possible to actuate main valve 200 faster than prior blow valves. For example, it may take 7.5 ms cycle time to open or close main valve 200 by actuating piston 208 through piston stroke 230. This represents an improvement over the asymmetric 29 ms to 44 ms cycle times required by prior inlet-pressure dependent blow valves. Main valve 200 furthermore provides improved accuracy of $\pm 0.5$ ms actuation time error over the $\pm 2$ ms error provided by prior valves.

In further embodiments, fluid may be provided to upper control chamber 214 and lower control chamber 216 independently of one another. For example, fluid may be provided to upper control chamber 214 and lower control chamber 215 from independent pressurized fluid sources, or fluid may be exhausted from upper control chamber 214 or lower control chamber 215 using independently controlled flow restrictors.

The example of actuating main valve 200 pneumatically is not intended to be limiting, however. In embodiments, main valve 200 may be actuated via a solenoid, or any other method commonly known to those of skill in the art.

In embodiments, main valve 200 may be biased to remain in a closed position once main valve 200 is closed. For example, in FIG. 2 main valve 200 is depicted in a closed position. Valve seat 228 is positioned inside housing 202 where valve seat end 222 of piston 208 and the area outside inner valve seat diameter 234 come together. Valve seat 228 is formed by a lip in the housing, positioned at least partially within the annular disk between the inner valve seat diameter 234 and the valve seat end 222 of piston 208. Valve seat end 222 has a diameter that is equal to piston diameter 232, and inner valve seat diameter 234 is formed to be smaller than piston diameter 232. When main valve 200 is closed so that valve seat end 222 is substantially seated on valve seat 228, the surface area of valve seat end 222 exposed to inlet fluid pressure 236 is less than the surface area of pressure compensation end 220 of piston 208 exposed to inlet fluid pressure 236. The upwards force provided by the inlet fluid pressure 236 on the valve seat end 222 of piston 108 when main valve 200 is closed is therefore less than the downwards pressure provided at the pressure compensation end 220, biasing main valve 200 in the closed position when main valve 200 is substantially closed. In embodiments, inner valve seat diameter 234 may be sized to provide 90% of the inlet pressurized fluid force of that provided at pressure compensation end 220.

Advantageously, piston 208 may therefore be moderately pressure offset when closed to retain main valve 200 in a close position. When piston 208 is more than 0.02mm unseated from valve seat 228, however, the pressures are equal and main valve 200 may be 100% pressure compensated again.

Once main valve 200 is no longer substantially closed and piston 208 is unseated from valve seat 228, however, the surface area at the valve seat end 222 exposed to the inlet pressure will be equal to the entire piston diameter 232 instead of just the more restrictive inner valve seat diameter 234. When main valve 200 is no longer closed, it will therefore cease to be pressure biased in a closed position. In example embodiments, valves have been found to provide pressure biasing when piston 208 is between a seated position on valve seat 228 and 0.02 mm away from valve seat 228. From 0.02mm to the end of the full stroke length 230, however, the pressure compensation is 100%. Advantageously, this allows main valve 200 to perform fast and reliably while still offering a biased closed position.

In order to avoid interrupting fluid flow through a blow valve, it may be desirable to avoid restricting the flow cross section of the fluid between inlet 204 and outlet 206 of main valve 200. In the example of main valve 200, the surface area of the fluid flow entering main valve 200 through inlet 204 is provided by Equation 1 below, where the internal valve seat area is $A_{IVS}$, and $D_{IVS}$ is the inner valve seat diameter 234:

$$A_{IVS} = \frac{D_{IVS}^2 \times \pi}{4} \qquad \text{(Eq. 1)}$$

The surface area between valve seat 228 and valve seat end 222, through which inlet fluid must also pass when main valve 200 is open, forms a lateral collar as defined by Equation 2 below. In Equation 2, $A_{LC}$ is the area of the lateral collar, $D_{IVS}$ is the diameter of the inner valve seat, and $L$ is piston stroke 230:

$$A_{LC} = D_{IVS} \times \pi \times L \qquad\qquad\qquad\qquad \text{(Eq. 2)}$$

Typically in prior blow valves, $A_{IVS}$ and $A_{LC}$ are designed to be equal, as required for a particular application. When $A_{IVS}$ and $A_{LC}$ are designed to include the same surface area, Equations 1 and 2 reduce so that inner valve seat diameter 234 is equal to four times stroke length 230, or $D_{IVS} = 4L$.

In embodiments of main valve 200, it may be desirable to minimize piston stroke 230 *L* to actuate main valve 200 more quickly. As may be seen in Equation 2, for equivalent values of lateral collar area $A_{LC}$, stroke length 230 *L* is inversely proportional to the inner valve seat diameter 234, $D_{IVS}$. Therefore, in embodiments lateral collar area $A_{LC}$ may be designed for a targeted fluid flow, but the area of the inner valve seat $A_{IVS}$ may not be designed to match. Instead, a minimal length of piston stroke 230 *L* may be selected. For example, piston stroke 230 *L* may be selected to be 3-4.5 mm in size. Once piston stroke 230 *L* is selected, inner valve seat diameter 234 $D_{IVS}$ may be determined based upon Equation 2. When piston stroke 230 *L* is minimized, the area of inner valve seat $A_{IVS}$ will be larger than the area of lateral collar $A_{LC}$. Therefore, to minimize piston stroke 230, main valve 200 may include a piston stroke 230 *L* that is less than one-fourth of the inner valve seat diameter, $D_{IVS}$. Advantageously, reducing the stroke length 230 *L* of main valve 200 provides for faster valve actuation. Shorter stroke length 230 *L* may also allow for a softer landing with lower impact velocity for piston 208, reducing potential damage to valve parts.

In embodiments, main valve 200 may further include seals 238a, 238b, and 238c. Seal 238a may be positioned between pressure compensation chamber 218 and upper control chamber 214. Seal 238b may be positioned between upper control chamber 214 and lower control chamber 216. Seal 238c may be positioned between lower control chamber 216 and outlet 206. Each of seals 238a, 238b, and 238c may be used to pneumatically seal the respective adjacent pressurized chambers.

Dynamic seal friction is a function of the forces from the pressures applied to the valve. Because main valve 200 is pressure-compensated when open, actuating piston 208 independently of inlet fluid pressure 236, the pressures that actuate main valve 200 are constant. Therefore, the seal friction is also constant regardless of inlet fluid pressure when using main valve 200, further providing repeatable performance and results.

In embodiments, annular portion 212 may include annular diameter 240 sized to provide a control chamber force that is much larger than the seal friction of the valve. A control chamber force may be any force that moves piston 208 up or down by pressurizing upper control chamber 214 or lower control chamber 216. Providing a control chamber force that is much greater than the seal friction may further provide for faster valve switching times.

In embodiments, blow valve 112 may further include a pilot valve. For example, FIG. 1 depicts pilot valve system 300. Pilot valve system 300 includes a pilot valve 302, fluid lines 304 and 306, exhaust silencers 308 and 312, restrictors 314 and 316, and pressurized fluid source 310. Pilot valve 302 may be in fluid communication with upper control port 224 via fluid line 304, and with lower control port 226 via fluid line 306.

In embodiments, pilot valve 302 may be spring biased into a first position (depicted in FIG. 3) in which pilot valve 302 provides pressurized fluid to upper control chamber 214 while exhausting fluid from lower control chamber 216, resulting in the closing of main valve 200. When pilot valve 302 is actuated, and the spring bias force is overcome, pressurized fluid may be provided to lower control chamber 216 and fluid may be exhausted from upper control chamber 214, resulting in the opening of main valve 200.

In the embodiment of FIG. 2, pilot valve 302 is a 5/2 solenoid valve. This is not intended to be limiting, however. In embodiments, pilot valve 302 may be any type of pilot valve known to those of skill in the art capable of providing fluid to and exhausting fluid from upper control chamber 214 and lower control chamber 216.

FIG. 4 depicts a further embodiment of pilot valve 304, a pilot valve 340. Pilot valve 340 includes a housing 342, a slide 344, a biasing element 346, and an actuating element 348. In the embodiment of FIG. 4, pilot valve 340 is a 5/2 valve.

Slide 344 is operable to reciprocate inside housing 342 to operate pilot valve 340. In a first position of pilot valve 340, slide 344 is positioned to allow fluid to flow from pressurized fluid source 310 to upper control chamber 214 via fluid line 304. In the first position, pilot valve 340 also vents fluid from lower control chamber 216 to exhaust 312 via fluid line 306. In a second position of pilot valve 340, slide 344 is positioned to allow fluid to flow from pressurized fluid source 310 to lower control chamber 216 via fluid line 306. In the second position, pilot valve 340 also vents fluid from upper control chamber 214 to exhaust 308 via fluid line 304.

In embodiments, slide 344 may be fabricated from metal. Advantageously, a metal slide 344 may alleviate the need for dynamic seals so that pilot valve 340 may operate with very little friction. This may provide for ease of operation of pilot valve 340, with repeatable operation and actuation times.

Pilot valve 340 may be electro-magnetically operated or pilot operated. Pilot valve 340 may be biased in a first position.

In embodiments, pilot 340 may include a pressure-balanced slide 344 to provide for fast and consistent valve actuation times.

In embodiments, slide 344 may provide a flow cross-section area that allows fluids to pass through pilot valve 340 largely unrestricted. The area of the flow cross section of pilot valve 340 $A_{PV}$ may be defined as the lateral collar defined in Equation 3:

$$A_{PV} = D_S \times \pi \times L_S. \qquad\qquad \text{(Eq. 3)}$$

Where $D_S$ is a spool valve diameter 350 and $L_S$ is a pilot valve stroke length 352. A desired flow cross section area $A_{PV}$ may be created using a number of combinations of spool valve diameter 350 $D_S$ and pilot valve stroke length 352 $L_S$. In embodiments, pilot valve stroke length 352 $L_S$ may be minimized by providing a relatively large spool valve diameter 350 $D_S$. For example, pilot valve stroke length 352 $L_S$ may be approximately 2 mm and spool valve diameter 350 $D_S$ may be approximately 12-14 mm. The shorter pilot valve stroke 352 $L_S$ may provide for faster switching times, which may advantageously result in faster actuation of main valve 200.

In embodiments, the openings in pilot valve 340 that lead to any of upper control chamber 214, lower control chamber 216, or exhausts 308 or 312 may be formed to be the narrowest point through which working fluid may pass in pilot valve 340. Advantageously, this may reduce scattering of working fluid through pilot valve 340. For example, the openings in pilot valve 340 that lead to any of upper control chamber 214, lower control chamber 216, or exhausts 308 or 312 may include a diameter in the range of 3.5 to 5 mm.

In embodiments, fluid exhausting from pilot valve 302 may be passed through a restrictor to further control the pressure in upper control chamber 214 and lower control chamber 216. For example, restrictor 314 may help control the flow of fluid exhausting from upper control chamber 214, and restrictor 316 may help control the flow of fluid exhausting from lower control chamber 216.

Pilot valve 302 may be operable to independently control the pressure in each of the upper control chamber 214 and the lower control chamber 216. Advantageously, this may allow more accurate control of main valve 200.

While blow valve 112, main valve 200 and pilot valve 302 are described above within the context of blow molding machine 100, this is not intended to be limiting. Those of skill in the art will recognize that blow mold valve 112, main valve 200, and/or pilot valve 302 may be used in any other fluid control application where speed, reliability, and repeatability are desired.

The detailed descriptions of the above embodiments are not exhaustive descriptions of all embodiments contemplated by the inventors to be within the scope of the Application.


**Claims**

1.   A blow valve (200) for a blow molding machine (100), the blow valve (200) comprising:

a housing (202) having an inlet (204) and an outlet (206);
a piston (208) movable inside the housing (202), the piston (208) including a pressure compensation end (222), a valve seat end (220), and a pressure compensation bore (210); and
a pressure compensation chamber (218) positioned between the pressure compensation end (220) of the piston and the housing (202), the pressure compensation chamber (218) in fluid communication with the inlet (204) via the valve seat end (222) of the piston (208) via the pressure compensation bore (210),
wherein the piston (208) is configured to actuate independently of an inlet fluid pressure (236), and
wherein the piston (208) further comprises an annular section (212), and the valve (200) further comprises:

an upper control chamber (214) positioned between an upper end of the annular section (212) and the housing (202); and
a lower control chamber (216) positioned between a lower end of the annular section (212) and the housing (202),

wherein the upper control chamber (214) and the lower control chamber (216) are operable to actuate the piston (208) independently of the inlet fluid pressure (236), wherein the valve (200) is biased to remain closed when the valve (200) is in a closed position,
wherein the valve (200) further comprises a pilot valve (302, 340), the pilot valve being operable to independently control the pressure in each of the upper control chamber (214) and the lower control chamber (216),
**characterized in that**
the pilot valve is a 5/2 valve.

**2.** The blow valve (200) of claim 1, further comprising:
a valve seat (228) configured to seat the piston (208) when the blow valve (200) is in a closed position, the valve seat (228) having an inner valve seat diameter (234) that is smaller than a piston diameter (232).

**3.** The blow valve (200) of claim 1, further comprising:
a valve seat (228) configured to seat the piston (208) when the blow valve (200) is in a closed position, the valve seat (228) having an inner valve seat diameter (234), wherein a piston stroke (230) is less than one-fourth of the inner valve seat diameter (234).

**4.** The blow valve (200) of claim 1, wherein the annular section (212) has an annular diameter (240), the annular diameter (240) sized to provide a control chamber force that is much larger than a seal friction force of the blow valve (200).

**5.** The blow valve (200) of claim 1, wherein the pilot valve is pressure-balanced.

**6.** The blow valve (200) of claim 1, wherein the pilot valve includes a slide (344) having a slide diameter (350) that is between 3.5 and 5 mm, and a slide stroke (352) that is approximately 2 mm.

**7.** A method for actuating a blow valve (200) for a blow molding machine, the method including the steps of:

providing a housing (202) having an inlet (204), and an outlet (206);
providing a piston (208) movable inside the housing, the piston (208) including a pressure compensation (222) end, a valve seat (220) end, and a pressure compensation bore (210), and wherein the piston includes an annular section, and the valve further includes an upper control chamber (214) between an upper end of the annular section and the housing, and a lower control chamber (216) between a lower end of the annular section and the housing;
providing pressure compensation between the inlet and a pressure compensation chamber (218) via the pressure compensation bore, the inlet positioned proximate to the valve seat end of the piston, and the pressure compensation chamber positioned between the pressure compensation end of the piston and the housing;
actuating the piston independently of an inlet fluid pressure, wherein actuating the piston independently of the inlet fluid pressure further includes pressurizing the upper control chamber independently of the lower control chamber using a pilot valve (302, 340); and
biasing the blow valve to remain closed when the blow valve is in a closed position
**characterized in that** the pilot valve (302, 340) is a 5/2 valve

**8.** The method of claim 7, wherein biasing the blow valve to remain closed when the blow valve is in the closed position includes providing a valve seat (228) configured to seat the piston when the blow valve is in a closed position, the valve seat having an inner valve seat diameter (234) that is smaller than a piston diameter (232).

**9.** The method of claim 7, wherein the blow valve includes a valve seat configured to seat the piston when the valve is in a closed position, and the method further comprises the step of:
minimizing a piston stroke (230) by sizing piston stroke to be less than one fourth of an inner valve seat diameter.

**10.** The method of claim 7, wherein the annular section has an annular diameter, the annular diameter (240) sized to provide a control chamber force that is much larger than a seal friction force of the valve.

**11.** The method of claim 7, wherein the pilot valve is pressure-balanced.

**12.** The method of claim 7, wherein the pilot valve includes a slide (344) having a slide diameter (350) that is between 3.5 and 5 mm, and a slide stroke (352) that is approximately 2 mm.


**Patentansprüche**

**1.** Blasventil (200) für eine Blasformmaschine (100), wobei das Blasventil (200) aufweist:

ein Gehäuse (202) mit einem Einlass (204) und einem Auslass (206);
einen Kolben (208), der im Inneren des Gehäuses (202) beweglich ist, wobei der Kolben (208) ein Druckausgleichsende (222), einen Ventilsitz (220) und eine Druckausgleichsbohrung (210) umfasst; und eine Druckausgleichskammer (218), die zwischen dem Druckausgleichsende (220) des Kolbens und dem Gehäuse (202) positioniert ist, wobei die Druckausgleichskammer (218) über das Ventilsitzende (222) des Kolbens über die Druckausgleichsbohrung (210) in einer Fluidverbindung mit dem Einlass (204) steht, wobei der Kolben (208) konfiguriert ist, um unabhängig von einem Einlassfluiddruck (236) betätigt zu werden, und wobei der Kolben (208) weiterhin einen ringförmigen Abschnitt (212) aufweist und das Ventil (200) weiterhin aufweist:

eine obere Steuerkammer (214), die zwischen einem oberen Ende des ringförmigen Abschnitts (212) und dem Gehäuse (202) positioniert ist; und eine untere Steuerkammer (216), die zwischen einem unteren Ende des ringförmigen Abschnitts (212) und dem Gehäuse (202) positioniert ist,

wobei die obere Steuerkammer (214) und die untere Steuerkammer (216) betriebsfähig sind, um den Kolben (208) unabhängig von dem Einlassfluiddruck (236) zu betätigen, wobei das Ventil (200) derart vorgespannt ist, dass es geschlossen bleibt, wenn das Ventil (200) in einer geschlossenen Position ist, wobei das Ventil (200) weiterhin ein Steuerventil (302, 340) aufweist, wobei das Steuerventil betriebsfähig ist, um den Druck in jeder der oberen Steuerkammer (214) und der unteren Steuerkammer (216) unabhängig zu steuern, **dadurch gekennzeichnet, dass** das Steuerventil ein 5/2-Ventil ist.

2. Blasventil (200) nach Anspruch 1, das weiterhin aufweist: einen Ventilsitz (228), der konfiguriert ist, um den Kolben (208) aufzulagern, wenn das Blasventil (200) in einer geschlossenen Position ist, wobei der Ventilsitz (228) einen inneren Ventilsitzdurchmesser (234) hat, der kleiner als ein Kolbendurchmesser (232) ist.

3. Blasventil (200) nach Anspruch 1, das weiterhin aufweist: einen Ventilsitz (228), der konfiguriert ist, um den Kolben (208) aufzulagern, wenn das Blasventil (200) in einer geschlossenen Position ist, wobei der Ventilsitz (228) einen inneren Ventilsitzdurchmesser (234) hat, wobei ein Kolbenhub (230) kleiner als ein Viertel des inneren Ventilsitzdurchmessers (234) ist.

4. Blasventil (200) nach Anspruch 1, wobei der ringförmige Abschnitt (212) einen Ringdurchmesser (240) hat, wobei der Ringdurchmesser (240) bemessen ist, um eine Steuerkammerkraft bereitzustellen, die viel größer als eine Dichtungsreibungskraft des Blasventils (200) ist.

5. Blasventil (200) nach Anspruch 1, wobei das Steuerventil druckausgeglichen ist.

6. Blasventil (200) nach Anspruch 1, wobei das Steuerventil einen Schieber (344) mit einem Schieberdurchmesser (350) umfasst, der zwischen 3,5 und 5 mm beträgt, und wobei ein Schieberhub (252) ungefähr 2 mm beträgt.

7. Verfahren zur Betätigung eines Blasventils (200) für eine Blasformmaschine, wobei das Verfahren die folgenden Schritte aufweist:

Bereitstellen eines Gehäuses (202) mit einem Einlass (204) und einem Auslass (206); Bereitstellen eines Kolbens (208), der im Inneren des Gehäuses (202) beweglich ist, wobei der Kolben (208) ein Druckausgleichsende (222), ein Ventilsitzende (220) und eine Druckausgleichsbohrung (210) umfasst; und wobei der Kolben einen ringförmigen Abschnitt umfasst und das Ventil weiterhin eine obere Steuerkammer (214) zwischen einem oberen Ende des ringförmigen Abschnitts und dem Gehäuse und eine untere Steuerkammer (216) zwischen einem unteren Ende des ringförmigen Abschnitts und dem Gehäuse umfasst; Bereitstellen eines Druckausgleichs zwischen dem Einlass und einer Druckausgleichskammer (218) über die Druckausgleichsbohrung, wobei der Einlass nahe an dem Ventilsitzende des Kolbens positioniert ist und die Druckausgleichskammer zwischen dem Druckausgleichsende des Kolbens und dem Gehäuse positioniert ist; Betätigen des Kolbens unabhängig von einem Einlassfluiddruck, wobei das Betätigen des Kolbens unabhängig von dem Einlassfluiddruck weiterhin ein Beaufschlagen der oberen Steuerkammer mit Druck unabhängig von der unteren Steuerkammer unter Verwendung eines Steuerventils (302, 340) umfasst; und Vorspannen des Blasventils, so dass es geschlossen bleibt, wenn das Blasventil in einer geschlossenen Position ist, **dadurch gekennzeichnet, dass** das Steuerventil (302, 340) ein 5/2-Ventil ist.

**8.** Verfahren nach Anspruch 7, wobei das Vorspannen des Blasventils, so dass es geschlossen bleibt, wenn das Blasventil in der geschlossenen Position ist, das Bereitstellen eines Ventilsitzes (228) umfasst, der konfiguriert ist, um den Kolben aufzulagern, wenn das Blasventil in einer geschlossenen Position ist, wobei der Ventilsitz einen inneren Ventilsitzdurchmesser (234) hat, der kleiner als ein Kolbendurchmesser (232) ist.

**9.** Verfahren nach Anspruch 7,
wobei das Blasventil einen Ventilsitz umfasst, der konfiguriert ist, um den Kolben aufzulagern, wenn das Ventil in einer geschlossenen Position ist, und wobei das Verfahren weiterhin den folgenden Schritt aufweist:
Minimieren eines Kolbenhubs (230), indem der Kolbenhub kleiner als ein Viertel des inneren Ventilsitzdurchmessers (234) bemessen wird.

**10.** Verfahren nach Anspruch 7,
wobei der ringförmige Abschnitt einen Ringdurchmesser hat, wobei der Ringdurchmesser (240) bemessen ist, um eine Steuerkammerkraft bereitzustellen, die viel größer als eine Dichtungsreibungskraft des Ventils ist.

**11.** Verfahren nach Anspruch 7, wobei das Steuerventil druckausgeglichen wird.

**12.** Verfahren nach Anspruch 7, wobei das Steuerventil einen Schieber (344) mit einem Schieberdurchmesser (350) umfasst, der zwischen 3,5 und 5 mm beträgt, und wobei ein Schieberhub (252) ungefähr 2 mm beträgt.


## Revendications

**1.** Une soupape de soufflage (200) pour une machine de moulage par soufflage (100), la soupape de soufflage (200) comprenant:

un boîtier (202) ayant une entrée (204) et une sortie (206);
un piston (208) mobile à l'intérieur du boîtier (202), le piston (208) comprenant une partie extrême de compensation de pression (220), une partie extrême formant siège de soupape (222) et un canal de compensation de pression (210); et
une chambre de compensation de pression (218) positionnée entre la partie extrême de compensation de pression (220) du piston et le boîtier (202), la chambre de compensation de pression (218) étant en communication fluidique avec l'entrée (204) via la partie extrême formant siège de soupape (222) du piston (208) via le canal de compensation de pression (210),
dans laquelle le piston (208) est configuré pour agir indépendamment d'une pression de fluide d'entrée (236), et
dans laquelle le piston (208) comprend en outre une section annulaire (212), et la soupape (200) comprend en outre:

une chambre de commande supérieure (214) positionnée entre une extrémité supérieure de la section annulaire (212) et le boîtier (202); et
une chambre de commande inférieure (216) positionnée entre une extrémité inférieure de la section annulaire (212) et le boîtier (202),

dans laquelle la chambre de commande supérieure (214) et la chambre de commande inférieure (216) peuvent fonctionner pour actionner le piston (208) indépendamment de la pression de fluide d'entrée (236),
dans laquelle la soupape (200) est sollicitée pour rester fermée lorsque la soupape (200) est en position fermée,
dans laquelle la soupape (200) comprend en outre une soupape pilote (302, 340), la soupape pilote pouvant être actionnée pour contrôler indépendamment la pression dans chacune parmi la chambre de commande supérieure (214) et la chambre de commande inférieure (216),
**caractérisée en ce que**
la soupape pilote est une soupape 5/2.

**2.** La soupape de soufflage (200) selon la revendication 1, comprenant en outre:
un siège de soupape (228) configuré pour loger le piston (208) lorsque la soupape de soufflage (200) est en position fermée, le siège de soupape (228) présentant un diamètre interne du siège de soupape (234) qui est inférieur à celui d'un diamètre de piston (232).

**3.** La soupape de soufflage (200) selon la revendication 1, comprenant en outre:

un siège de soupape (228) configuré pour former siège pour le piston (208) lorsque la soupape de soufflage (200) est en position fermée, le siège de soupape (228) présentant un diamètre de siège de soupape intérieur (234), la course de piston (230) étant inférieure à un quart du diamètre de siège de soupape intérieur (234).

4. La soupape de soufflage (200) selon la revendication 1, dans laquelle la section annulaire (212) présente un diamètre annulaire (240), le diamètre annulaire (240) étant dimensionné pour fournir une force de chambre de commande qui soit bien supérieure à une force de frottement d'un joint de la soupape de soufflage (200).

5. La soupape de soufflage (200) selon la revendication 1, dans laquelle la soupape pilote est équilibrée en pression.

6. La soupape de soufflage (200) selon la revendication 1, dans laquelle la soupape pilote comprend un tiroir (344) ayant un diamètre (350) de coulisseau compris entre 3,5 et 5 mm, et une course de coulissement (352) d'environ 2 mm.

7. Un procédé d'actionnement d'une soupape de soufflage (200) pour une machine de moulage par soufflage, le procédé comprenant les étapes consistant à:

fournir un boîtier (202) ayant une entrée (204) et un sortie (206);
fournir un piston (208) déplaçable à l'intérieur du boîtier, le piston (208) comprenant une partie extrême de compensation de pression (220), une partie extrême formant siège de soupape (222) et un canal de compensation de pression (210), et
dans lequel le piston comprend une section annulaire, et la soupape comprend en outre une chambre de commande supérieure (214) entre une extrémité supérieure de la section annulaire et le boîtier, et une chambre de commande inférieure (216) entre une extrémité inférieure de la section annulaire et le boîtier;
fournir une compensation de pression entre l'entrée et une chambre de compensation de pression (218) via le canal de compensation de pression, l'entrée étant positionnée à proximité de la partie extrême formant siège de soupape du piston, et la chambre de compensation de pression étant positionnée entre la partie extrême de compensation de pression du piston et le boîtier ;
l'actionnement du piston indépendamment d'une pression de fluide d'entrée, dans lequel l'actionnement du piston indépendamment de la pression de fluide d'entrée comprend en outre la mise sous pression de la chambre de commande supérieure indépendamment de la chambre de commande inférieure à l'aide d'une soupape pilote (302, 340); et
solliciter la soupape de soufflage pour qu'elle reste fermée lorsque la soupape de soufflage est dans une position fermée,
**caractérisé en ce que**
la soupape pilote (302, 340) est une soupape 5/2

8. Le procédé selon la revendication 7, dans lequel l'étape consistant à solliciter la soupape de soufflage pour qu'elle reste fermée lorsque la soupape de soufflage est en position fermée comprend la fourniture d'un siège de soupape (228) configuré pour former siège pour le piston lorsque la soupape de soufflage est dans une position fermée, le siège de soupape ayant un diamètre de siège de soupape interne (234) inférieur à un diamètre du piston (232).

9. Le procédé selon la revendication 7, dans lequel
la soupape de soufflage comprend un siège de soupape configuré pour former siège pour le piston lorsque la soupape est dans une position fermée, et le procédé comprend en outre l'étape consistant à minimiser une course de piston (230) en dimensionnant la course de piston pour qu'elle soit inférieure à un quart du diamètre intérieur du siège de soupape.

10. Le procédé selon la revendication 7, dans lequel
la section annulaire présente un diamètre annulaire, le diamètre annulaire (240) étant dimensionné pour fournir une force de la chambre de commande qui soit bien supérieure à une force de frottement d'un joint de la soupape.

11. Le procédé selon la revendication 7, dans lequel la soupape pilote est équilibrée en pression.

12. Le procédé selon la revendication 7, dans lequel la soupape pilote comprend un tiroir (344) ayant un diamètre de coulisseau (350) compris entre 3,5 et 5 mm, et une course de coulissement (352) d'environ 2 mm.

**100**

104

102

112a

Exh

112b

REC

112c

P2

P1

112d

110

112

108

106

**FIG. 1**

FIG. 2

FIG. 3

EP 3 105 032 B1

**FIG. 4**

**EP 3 105 032 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2827541 A1
- WO 2009010096 A1
- EP 2402143 A1